# EUROPEAN PATENT APPLICATION

(11) **EP 2 518 972 A1**
(43) Date of publication of application: **31.10.2012**
(21) Application number: 12165190.5
(22) Date of filing: 23.04.2012
(51) Int. Cl.: H04L 29/06, H04L 29/08, H04L 29/12

(54) **System and method for device addressing**

(30) Priority: 27.04.2011 US 201113095637
(71) Applicant: Telefonaktiebolaget L M Ericsson AB (Publ), 164 83 Stockholm (SE)
(72) Inventor: Ton, Andrew, San Jose, CA California 95136 (US); Svensson, Martin, SE 12629 Hägersten (SE); Gronowski, Kristoffer, Santa Clara, CA California 95054 (US); Radia, Nimish, Dublin, CA California 94568 (US); Xing, Bo, Fremont, CA California 94555 (US)
(74) Representative: Rees, Simon John Lewis

(57) **Abstract**

A system and method for enabling communication with one or more mobile communication devices. In one aspect, one or more mobile communication devices use an authenticated web identification to obtain a Uniform Resource Locator (URL) which is associated with the mobile communication device(s). The URL may be used to enable communication between the mobile communication device(s) and an application service via the Internet.

## Description

### TECHNICAL FIELD

The present invention relates to a system and method for creating an Internet address for one or more mobile communication devices to enable communication between the device(s), using the Internet address created for the device(s), and, for example, an application service, via the Internet.

### BACKGROUND

In networks, systems are typically connected to one another by using Internet Protocol (IP) addresses. For simplicity and convenience purposes, each IP address is given a name. The Domain Name System (DNS) translates an IP address of a system to a host name. When a connection is made between two or more systems, a communication channel is typically established using one of several available protocols. The most popular protocols are Hypertext Transfer Protocol (HTTP), Bidirectional Comet, and Web Sockets.

HTTP can be understood as a request-response protocol between a client and a server. In one example of a conventional process, the client submits a HTTP request to the server. The server, which may own content or supply resources, processes the request and returns a response to the client. The response often includes status information relating to the request, and may also contain requested content in the response body.

In some cases, when the client is either in a home or office network, the accessibility of the client may be controlled by implementing Network Address Translation (NAT) or using a firewall. The main functionality of NAT is to map all addresses of internal systems or devices to a number of public addresses and ports. All messages going out of the network may be required to go through NAT. NAT rewrites internal addresses with public addresses and then records these mappings. When a response is received, NAT checks the addresses with the record and then forwards the response to the network. If a message comes to the network, NAT will typically drop the message unless there is a recorded mapping between the original address and destination address. A firewall may be used to block applications or services in the Internet "cloud" from accessing internal systems.

To avoid such blockages, Bidirectional Comet and Web Sockets protocols may be used. Bidirectional Comet, which is built on top of the HTTP protocol, supports "push"-style communication. This protocol uses two HTTP connections to connect the client to the server - a first HTTP connection for normal client-server requests, and a second unidirectional HTTP connection for enabling the server to "push" (i.e., transmit) messages to the client. By contrast, the Web Sockets protocol typically uses only one HTTP connection, but supports full-duplex communication between the client and server. Accordingly, both of the Bidirectional Comet and Web Sockets protocols allow the server to access and push updates to the client. These two protocols are largely employed by many applications and services to push messages to a system or device.

However, there are several shortcomings relating to the current communication technologies described above. First, not all systems or devices are associated with DNS addresses. Second, for security purposes, many organizations implement NAT and/or install a firewall to protect their internal systems from attacks. However, both means of control may limit or completely block access requests from legitimate services.

Each of the Bidirectional Comet and Web Sockets protocols presents certain difficulties. To connect an application to a system or device, Bidirectional Comet uses two connections and Web Sockets optimally uses one connection. Thus, if a system or device runs some number of applications, then the network needs at least the same number, or double the number, of connections as the number of applications. Further, since these protocols maintain open connections between the client and server, they must transmit periodic wake-up messages; otherwise, NAT and/or the firewall will refresh the list of the mappings of client-server addresses. Consequently, the overhead associated with operation of these networks is high, and resources are wasted. These concerns are especially significant for mobile devices, such as cellular telephones, laptop computers or portable tablet devices, for which battery capacity is generally limited.

In addition, from the perspective of the customer, these technologies are costly and inefficient, because the customer typically receives irrelevant data in addition to the requested content. As a result, precious bandwidth is wastefully consumed.

Further, as networks and mobile devices have become more robust, real-time communication has become more critical to both consumers and services. For example, instant messaging services and software and system update services all must communicate with and send messages to the customers' devices or systems. Further, social networking has increasingly played an important role in daily lives of many people. Accordingly, there is a need for a solution to address the drawbacks associated with the technologies described above.

### SUMMARY

Particular embodiments of the present invention provide a method, apparatus, and computer program product that enables communication with one or more mobile communication devices through the creation of a Uniform Resource Locator (URL) that is associated with the one or more devices. In one aspect, a mobile communication device uses an authenticated web identification to obtain a Uniform Resource Locator (URL) which is associated with the mobile communication device. The URL may be used to enable communication between the mobile communication device and an application service via the Internet. In some embodiments, this method, apparatus, and computer program product authenticates a web identification of the mobile communication device via an OpenID provider service.

In one particular aspect, a method for enabling communication with a communication device is provided. The communication device may be a mobile communication device and/or a wireless communication device. First, the Internet is accessed on the communication device. A web identification authentication service is entered via the Internet. A request for information is received from the web identification authentication service. A response that includes the requested information is then generated and transmitted to the web identification authentication service. An indication of identification authentication is received from the web identification authentication service. A device address and the received indication of identification authentication are then transmitted to a server node. A Uniform Resource Locator (URL) created in response to the received transmission of the device address and the indication of identification authentication is then received from the server node. The received URL is then stored in the communication device.

In some embodiments, the method may further include enabling communication with one or more additional communication devices, where each of the one or more additional communication devices is configured to use the same received indication of identification authentication. In these embodiments, communication with each of the one or more additional communication devices is enabled by each of the one or more additional communication devices receiving the previously created URL from the server node and storing the received URL.

In some embodiments, the method may further comprise using the stored URL to communicate with an application service via the server node. In some embodiments, the steps of receiving the indication of identification authentication from the web identification authentication service, transmitting the device address and the received indication of identification authentication to the server node, and receiving the URL from the server node may be performed by using a MobileClient application residing on the communication device.

In some embodiments, the step of accessing the Internet may include opening a web browser residing on the communication device and using the web browser to access the Internet. In some embodiments, the web identification authentication service comprises an OpenID provider service. The received request for information may include a request for a user name and a password. The received indication of identification authentication may include an OpenID token.

In another aspect, particular embodiments of the present invention provide a communication device for use in an Internet-accessible communication network. The communication device is in communication with a server node residing on the network. The communication device comprises a processor, a transceiver coupled to the processor, and a memory coupled to the processor. The processor is configured to enable access to the Internet and to enable entry to a web identification authentication service via the Internet. The processor is further configured to receive, via the transceiver, a request for information from the web identification authentication service. The processor is further configured to generate a response, the response including the requested information; and to cause the transceiver to transmit the generated response to the web identification authentication service. The processor is further configured to receive, via the transceiver, an indication of identification authentication from the web identification authentication service; and to cause the transceiver to transmit a device address and the received indication of identification authentication to the server node. The processor is further configured to receive, from the server node via the transceiver, a Uniform Resource Locator (URL) created in response to the received transmission of the device address and the indication of identification authentication; and to store the received URL in the memory.

In some embodiments, the processor may be further configured to use the stored URL for enabling the communication device to communicate with an application service via the server node. In some embodiments, the communication device may further comprise a MobileClient application residing thereon. The processor may be further configured to use the MobileClient application to receive, via the transceiver, the indication of identification authentication from the web identification authentication service; and to cause the transceiver to transmit the device address and the received indication of identification authentication to the server node; and to receive, via the transceiver, the URL address from the server node.

In some embodiments, the communication device may further comprise a web browser. The processor may be further configured to open the web browser and use the web browser to access the Internet.

In some embodiments, the web identification authentication service may comprise an OpenID provider service. The request for information may include a request for a user name and a password. The received indication of identification authentication may comprise an OpenID token.

In yet another aspect, particular embodiments of the present invention provide a method for providing a communication channel with one or more communication devices. First, an address identifying the one or more communication devices and an indication of an authenticated web identification relating to the one or more communication devices from a web identification authentication service are received and stored. Then, the stored address and the stored indication are used to create a Uniform Resource Locator (URL) associated with the one or more communication devices, and the created URL is transmitted to the one or more communication devices. A request is received from an application service to communicate with the one or more communication devices. The stored address is retrieved and used to establish the communication channel with the one or more communication devices.

In some embodiments, the web identification authentication service may comprise an OpenID provider. The indication of an authenticated web identification may comprise an OpenID token.

In some embodiments, the method may further include the step of interfacing with a MobileClient application residing on the one or more communication devices to receive the address identifying the one or more communication devices and the indication of an authenticated web identification from the web identification authentication service, and to transmit the created URL to the one or more communication devices.

In still another aspect, particular embodiments of the present invention provide a server node for providing a communication channel with one or more communication devices. The server node comprises a processor, a transceiver coupled to the processor, and a memory coupled to the processor. The processor is configured to receive, via the transceiver, an address identifying the one or more communication devices and an indication of an authenticated web identification relating to the one or more communication devices from a web identification authentication service, and to cause the received address and the received indication to be stored in the memory. The processor is further configured to use the stored address and the stored indication to create a Uniform Resource Locator (URL) associated with the one or more communication devices, and to cause the transceiver to transmit the created URL to the one or more communication devices. The processor is further configured to receive, via the transceiver, a request from an application service to communicate with the one or more communication devices; retrieve the stored address from the memory; and use the retrieved address to establish the communication channel between the server node and the one or more communication devices.

In some embodiments, the web identification authentication service may comprise an OpenID provider. The indication of an authenticated web identification may comprise an OpenID token.

In some embodiments, the processor may be further configured to interface with a MobileClient application residing on the one or more communication devices to receive, via the transceiver, the address identifying the one or more communication devices and the indication of an authenticated web identification from the web identification authentication service, and to cause the transceiver to transmit the created URL to the one or more communication devices.

In still another aspect, the invention provides a method for enabling communication with a user. First, a communication device is used to access a web identification authentication service via the Internet, and a request is received, via the communication device, for user-specific information from the web identification authentication service. The user inputs the requested user-specific information into the communication device, and then uses the communication device to transmit the user-specific information to the web identification authentication service. A user-specific indication of identification authentication from the web identification authentication service is then received via the communication device. Then, the user inputs a user-specific identifier into the communication device and uses the communication device to transmit the user-specific identifier and the received indication of identification authentication to a server node. A Uniform Resource Locator (URL) created in response to the received transmission of the user-specific identifier and the indication of identification authentication is received from the server node. Finally, the received URL is stored in the communication device. The stored URL and the communication device may be used to communicate with an application service via the server node. Further, communication with one or more additional communication devices may be enabled by storing the received URL in each of the one or more communication devices. In some embodiments, the user may input a user-specific identifier such as, for example, a personal identification number, a user-generated text string, and an email address. In some embodiments, the web identification authentication service may include OpenID, and the user-specific indication of identification authentication may include an OpenID token that is associated with the user.

In yet another aspect, a computer program product for enabling communication with a communication device is provided. The computer program product includes a computer readable medium storing computer readable program code. In some embodiments, the computer readable program code includes a set of instructions for accessing the Internet on the communication device. The computer readable program code further includes a set of instructions for entering a web identification authentication service via the Internet. The computer readable program code further includes a set of instructions for receiving a request for information is received from the web identification authentication service, and a set of instructions for generating and transmitting a response that includes the requested information to the web identification authentication service. The computer readable program code further includes a set of instructions for receiving an indication of identification authentication from the web identification authentication service, and a set of instructions for transmitting a device address and the received indication of identification authentication to a server node. The computer readable program code further includes a set of instructions for receiving, from the server node, a Uniform Resource Locator (URL) created in response to the received transmission of the device address and the indication of identification authentication. The computer readable program code further includes a set of instructions for storing the received URL in the communication device.

In some embodiments, the computer readable program code may further include a set of instructions for using the stored URL to communicate with an application service via the server node. In some embodiments, the computer readable program code may further include a set of instructions for using a MobileClient application residing on the communication device to receive the indication of identification authentication from the web identification authentication service, to transmit the device address and the received indication of identification authentication to the server node, and to receive the URL from the server node.

In some embodiments, the computer readable program code may further include a set of instructions for accessing the Internet by opening a web browser residing on the communication device and using the web browser to access the Internet. In some embodiments, the web identification authentication service comprises an OpenID provider service. The received request for information may include a request for a user name and a password. The received indication of identification authentication may include an OpenID token.

In still another aspect, a computer program product for providing a communication channel with a communication device is provided. The computer program product includes a computer readable medium storing computer readable program code. In some embodiments, the computer readable program code includes a set of instructions for receiving and storing an address identifying the communication device and an indication of an authenticated web identification relating to the communication device from a web identification authentication service. The computer readable program code further includes a set of instructions for using the stored address and the stored indication to create a Uniform Resource Locator (URL) associated with the communication device, and a set of instructions for transmitting the created URL to the communication device. The computer readable program code further includes a set of instructions for receiving a request from an application service to communicate with the communication device. The computer readable program code further includes a set of instructions for retrieving the stored address and a set of instructions for using the retrieved address to establish the communication channel with the communication device.

In some embodiments, the web identification authentication service may comprise an OpenID provider. The indication of an authenticated web identification may comprise an OpenID token.

In some embodiments, the computer readable program code may further include a set of instructions for interfacing with a MobileClient application residing on the communication device to receive the address identifying the mobile communication device and the indication of an authenticated web identification from the web identification authentication service, and to transmit the created URL to the communication device.

The above and other aspects and embodiments are described below with reference to the accompanying drawings.

### BRIEF DESCRIPTION OF THE DRAWINGS

The accompanying drawings, which are incorporated herein and form part of the specification, illustrate various embodiments of the present disclosure and, together with the description, further serve to explain the principles of the disclosure and to enable a person skilled in the pertinent art to make and use the embodiments disclosed herein. In the drawings, like reference numbers indicate identical or functionally similar elements.

FIG. 1 illustrates an architecture of a wireless communication system according to an exemplary embodiment of the present invention.

FIG. 2 is a block diagram of a server node as used in the system of FIG. 1.

FIG. 3 is a block diagram of a mobile communication device as used in the system of FIG. 1.

FIG. 4 is a data flow diagram illustrating a process for assigning a URL to a mobile communication device, in accordance with exemplary embodiments of the present invention.

FIG. 5 is a data flow diagram illustrating a process for enabling a communication between a third party application service and a mobile communication device by using a URL associated with the mobile communication device, in accordance with exemplary embodiments of the present invention.

FIG. 6 is a data flow diagram illustrating a process for enabling a communication between a third party application service and a mobile communication device by using a URL associated with the mobile communication device, in accordance with an alternative embodiment of the present invention.

FIG. 7 is a screen shot of a login page for an application, including a request for an authenticated web identification, in accordance with exemplary embodiments of the present invention.

FIG. 8 is a screen shot of a login page for a web identification authentication service in accordance with exemplary embodiments of the present invention.

FIG. 9 is a screen shot of a confirmation page for the web identification authentication service of FIG. 8, in accordance with exemplary embodiments of the present invention.

FIG. 10 is a flow chart illustrating a process for obtaining a URL associated with a mobile communication device, in accordance with exemplary embodiments of the present invention.

FIG. 11 is a block diagram illustrating example software components of a wireless communication device, in accordance with exemplary embodiments of the present invention.

FIG. 12 is a flow chart illustrating a process for enabling communication between a mobile communication device and an application service by creating a URL associated with the mobile communication device, in accordance with exemplary embodiments of the present invention.

FIG. 13 is a block diagram illustrating example software components of a server node, in accordance with exemplary embodiments of the present invention.

### DETAILED DESCRIPTION

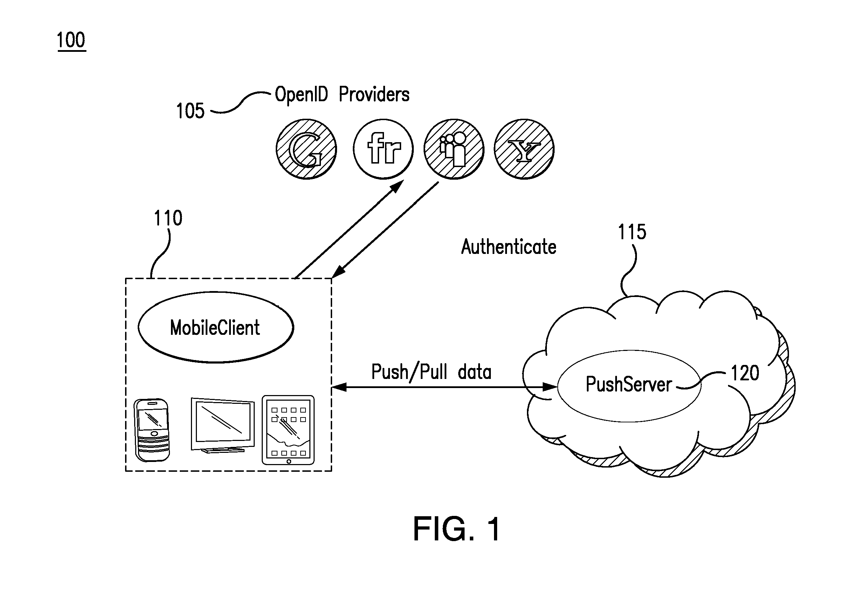

Referring to FIG. 1, in exemplary embodiments of the present invention 100, a Uniform Resource Locator (URL), which may be permanently associated with a user's mobile communication device 110 (e.g., a cellular telephone, a laptop computer, or a portable electronic tablet), is created using information associated with the user (e.g., an OpenID token that is returned by an OpenID provider OP in as a response to a successful authentication). This URL may then be used by any services in (or connected to) network 115, or "cloud," to access or communicate with the user's communication device 110 via a push server 120 that has established a connection (or "push channel") with communication device 110. For ease of understanding and for the sake of brevity, we shall assume that an OpenID token is used to obtain the URL, but other information associated with the user could be used.

The user can identify a number of devices and systems 110 using the same OpenID token. In such a case, the user will simultaneously receive a message on all devices and systems. Similarly, the user can obtain an OpenID token that is effectively associated with the user herself, instead of the OpenID token being directly associated with a particular device. In this aspect, the user can subsequently identify any device or system for which the personal OpenID token is operational. Conversely, the user can use more than one OpenID token set for each system or device, if desired. In this manner, the user may categorize types of messages she wishes to receive on each device. In addition, when the push channel is established and the URL is available, the user can deploy her own applications at the push server 120 in the cloud 115. Furthermore, developers or services can also register their applications to the push server 120. Whether deployed by the user or a developer, all applications can access the user's device or system 110 by sharing only one push channel. In some embodiments, the push channel may be built by using the Web Sockets protocol; however, only one connection is needed for all applications.

In exemplary embodiments, the present invention provides several advantages over conventional systems. First, the use of OpenID-based addressing provides a stable push address. Second, because a user can use the same OpenID identifier for multiple devices, those devices can be made to be accessible through a single address, instead of separate addresses. As a result, the user can be contacted via whichever device happens to be in use by the user at any given moment. This may be especially useful in cases where an urgent communication request needs the user's timely attention.

A third advantage is that a single push channel between the device and the push server in the cloud can be shared by all client services. Accordingly, overhead and waste of resources can be dramatically reduced.

A fourth advantage is that the present invention allows a user to establish multiple personas and to group her devices accordingly for different communication purposes. To avail this advantage, the user simply needs to sign in on a device with an appropriate OpenID identifier. For example, a user may sign in on a Blackberry device by using a Linkedln OpenID identifier for only business-related communications.

The present invention also offers the advantage that the user's identity is protected. In some embodiments, the use of OpenID token offers a convenient and flexible way of authentication. The user may use any preferred OpenID provider to convert her electronic device into an accessible node for social networks, such as Facebook or Myspace. In alternative embodiments, instead of OpenID, a different web identification authentication service may be used, such as, for example, Mobile Station Integrated Services Digital Network (MSISDN) number, International Mobile Equipment Identity (IMEI), Message Authentication Code (MAC), or serial number. An additional advantage of the present invention is that an application service is guaranteed to communicate with the right customers by using the push channel.

In a preferred embodiment, an OpenID token associated with a user is used to create a URL that can be used by a third party application to communicate with a communication device 110 used by the user. The OpenID token may be directly associated with the communication device 110, or it may be directly associated with the user through the use of a user identifier, such as, for example, a personal email address, a personal identification number (PIN), or a user-created string such as a username. In the latter case, the user then associates the OpenID token with one or more communication devices 110. A push channel is established between the communication device 110 and a push server 120. In some embodiments, when the user starts her communication device 110, the device launches a web server that resides on the communication device 110 and is used as a local server. In some embodiments, the web server includes or is associated with a pre-installed client application called MobileClient. The web server initiates a bootstrap process to launch the MobileClient application. A browser is opened and a login page displayed on the device 110. On this login page, the user selects an OpenID provider 105. The MobileClient application directs the user to the OpenID provider site, and the user is requested to log in to her account with the OpenID provider 105.

After authenticating the user, the OpenID provider generates an OpenID token that serves as an indication of identification authentication, the OpenID provider 105 sends the user's OpenID token to MobileClient. The authentication happens at the OpenID provider site, and the user's credentials are unknown to MobileClient. When receiving the user's OpenID token, MobileClient binds it as an identifier to the device address. In some embodiments, this binding is then published to a service in the cloud 115 known as the push server 120. The push server 120 uses the OpenID token to create a URL which may be permanently associated with the device 110, and then stores the OpenID token-address binding. The push server 120 may create a URL that includes the device address and the OpenID token, such as, for example: http://server:port/push-service/openid/{open-token} or http://server:port/push-service/nic-mac/{device MAC address} or http://server:port/push-service/phone-number/{device phone number}.

The push server 120 then returns the URL to the MobileClient, which then stores the URL in the communication device 110 (e.g., it may be stored in the context of the local web server). Any applications installed in the same local web server on the user's communication device 110 can then retrieve this URL. This URL is made public for any services or clients that desire to communicate with the user's communication device 110. A push channel is established between the MobileClient and the push server 120 using any existing protocol. Any services or applications in the cloud 115 can communicate with the device 110 via the push server 120 and the push channel.

Accordingly, in exemplary embodiments, the MobileClient application runs on a web server located at the user's mobile device 110. The OpenID provider 105, such as Google, Yahoo, America OnLine, Flickr, or many others, or other "Identity Provider," is a service that provides web identification authentication, such as an OpenID authentication. The OpenID provider 105 also registers an OpenID URL. The push server 120 documents the mapping of an OpenID token to the address of the associated communication device 110, and thus provides a lookup service for any applications to communicate with the device 110. In some embodiments, the push server 120 may use a commercially available protocol, such as, for example, Bidirectional Comet, Web Sockets, Apple Push Notification Service, or Android COD.

In some embodiments, the system 100 may include additional security for users of the push channel. Because the push channel is an HTTP REST resource, policy enforcement can be executed on the push channel. In an embodiment, the push channel can be protected by requiring authorization from the user of the mobile device 110. For example, the OAuth service may be used to obtain such authorization in the form of an OAuth token. In another embodiment, throttling and rate limiting can be used before allowing a requestor to send a message on the push channel. For example, the throttling may be based on a number of previous requests submitted by the requestor, or the throttling may be based on a cap on the number of concurrent messages that should be received by the device 110.

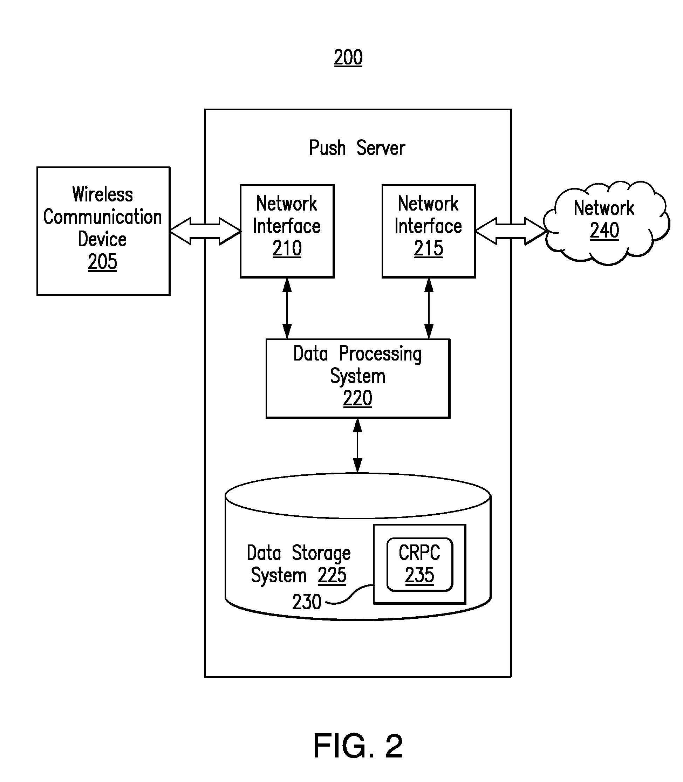

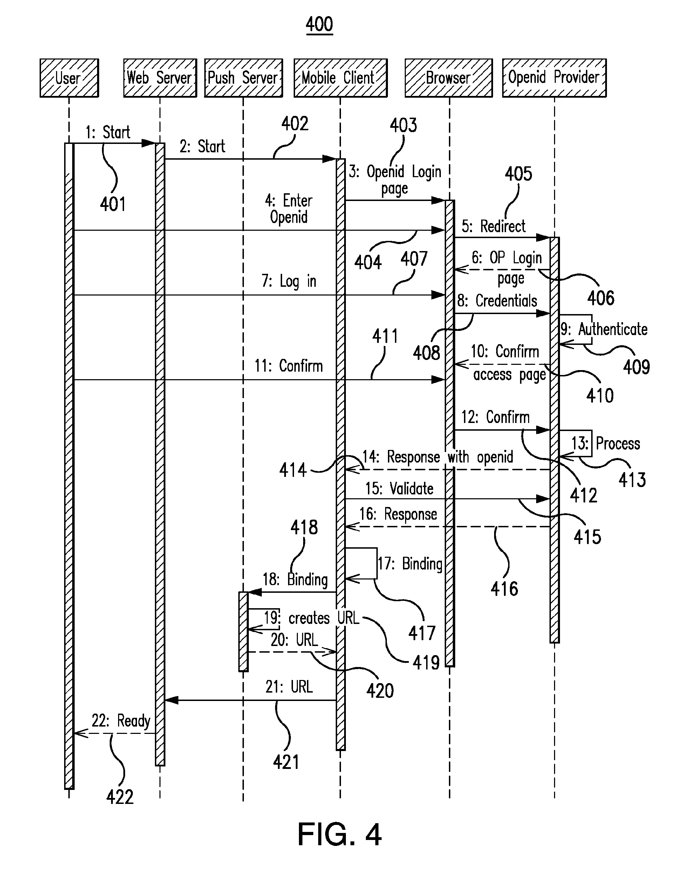

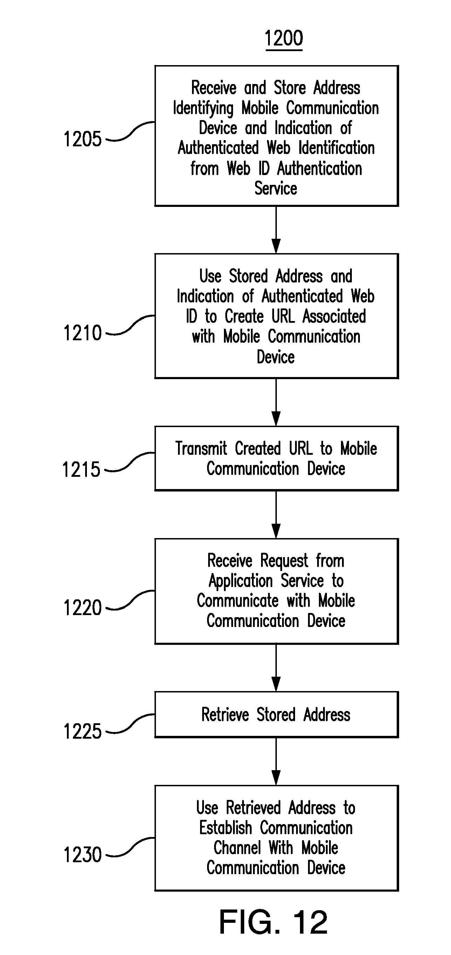

Referring now to FIG. 2, a block diagram 200 of a server node (e.g., push server 120) according to some embodiments of the invention is illustrated. As shown in FIG. 2, the push server node may include: a data processing system 220, which may include one or more microprocessors and/or one or more circuits, such as an application specific integrated circuit (ASIC), Field-programmable gate arrays (FPGAs), etc; network interfaces 210 and 215; and a data storage system 225, which may include one or more non-volatile storage devices and/or one or more volatile storage devices (e.g., random access memory (RAM)). The network interface 210 is configured to communicate with a wireless communication device 205, and the network interface 215 is configured to communicate with a network 240. In embodiments where data processing system 220 includes a microprocessor, computer readable program code 235 may be stored in a computer readable medium 230, such as, but not limited, to magnetic media (e.g., a hard disk), optical media (e.g., a DVD), memory devices (e.g., random access memory), etc. In some embodiments, computer readable program code 235 is configured such that when executed by a processor, code 235 causes the push server node to perform steps described below (e.g., steps described below with reference to the message sequences shown in FIGS. 4, 5, and 6 and the flow chart shown in FIG. 12). In other embodiments, the push server node is configured to perform steps described above without the need for code 235. That is, for example, data processing system 220 may consist merely of one or more ASICs. Hence, the features of the present invention described above may be implemented in hardware and/or software. For example, in particular embodiments, the functional components of the push server node described above may be implemented by data processing system 220 executing computer instructions 235, by data processing system 220 operating independent of any computer instructions 235, or by any suitable combination of hardware and/or software.

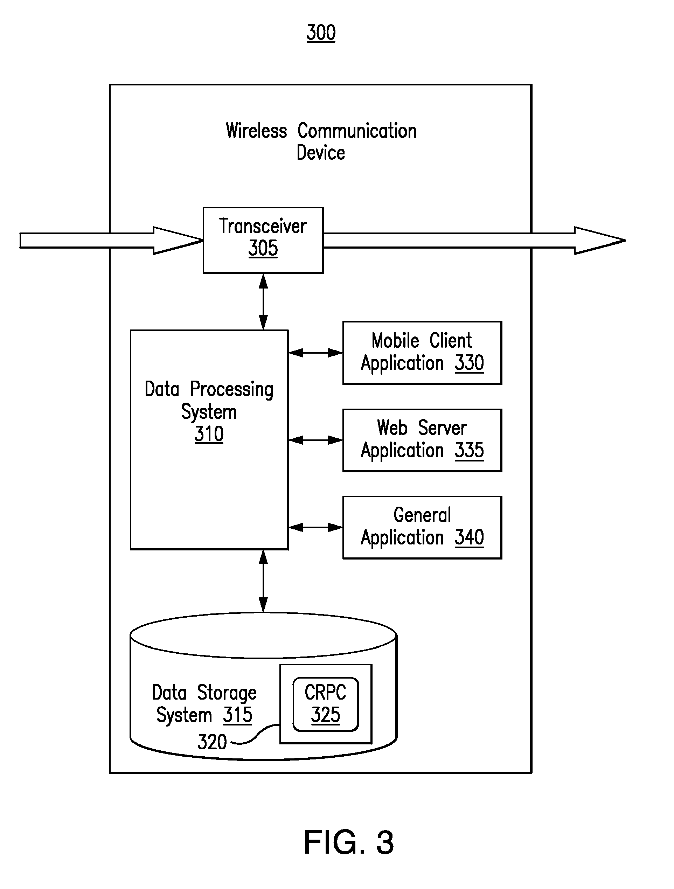

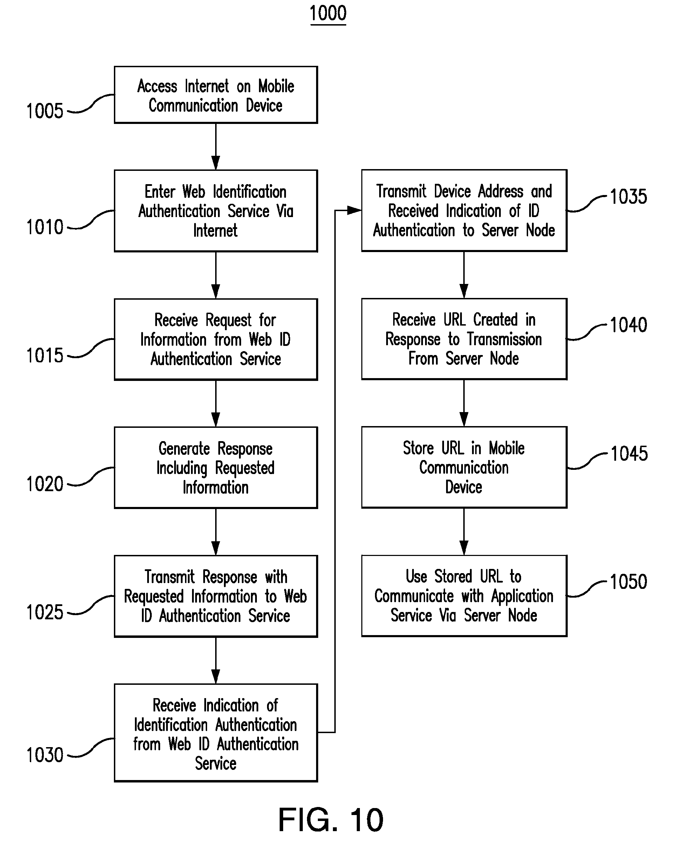

Referring now to FIG. 3, a block diagram of wireless communication device 205 according to some embodiments of the invention is illustrated. As shown in FIG. 3, wireless communication device 205 may include: a data processing system 310, which may include one or more microprocessors and/or one or more circuits, such as an application specific integrated circuit (ASIC), Field-programmable gate arrays (FPGAs), etc; a transceiver 305 for transmitting and receiving data; and a data storage system 315, which may include one or more non-volatile storage devices and/or one or more volatile storage devices (e.g., random access memory (RAM)). In some embodiments, the wireless communication device 205 may also include resident applications such as a MobileClient application 330, a web server application 335, and a general application 340, each of which is configured to interact with the data processing system 310. In embodiments where data processing system 310 includes a microprocessor, computer readable program code 325 may be stored in a computer readable medium 320, such as, but not limited, to magnetic media (e.g., a hard disk), optical media (e.g., a DVD), memory devices (e.g., random access memory), etc. In some embodiments, computer readable program code 325 is configured such that when executed by a processor, code 325 causes wireless communication device 205 to perform steps described below (e.g., steps described above with reference to the message sequences shown in FIGS. 4, 5, and 6 and the flow chart shown in FIG. 10). In other embodiments, wireless communication device 205 is configured to perform steps described above without the need for code 325. That is, for example, data processing system 310 may consist merely of one or more ASICs. Hence, the features of the present invention described above may be implemented in hardware and/or software. For example, in particular embodiments, the functional components of wireless communication device 205 described above may be implemented by data processing system 310 executing computer instructions 325, by data processing system 310 operating independent of any computer instructions 325, or by any suitable combination of hardware and/or software.

Referring now to FIG. 4, a data flow diagram 400 illustrating a process for assigning a URL to a mobile communication device, in accordance with exemplary embodiments of the present invention, is shown. The diagram 400 assumes that a mobile communication device has installed thereon a resident web server which encloses the MobileClient application.

In step 1 401, the user starts the web server on the mobile communication device. In step 2 402, the web server initiates the bootstrap process and starts the MobileClient application. In step 3 403, MobileClient opens a browser and displays the login page.

In step 4 404, the user enters a web identification authentication service, such as an OpenID provider service. In step 5 405, the user is redirected to the OpenID provider's site. In step 6 406, the OpenID provider displays a login page. In step 7 407, the user logs in to the OpenID provider site with her username and password. Then, at step 8 408, the user's credentials are sent to the OpenID provider, and at step 9 409, the OpenID provider authenticates the user's identity. The authentication process occurs at the OpenID provider site.

At step 10 410, after successfully authenticating the user's identity, the OpenID provider displays a page that asks the user to confirm entry to MobileClient, thereby allowing MobileClient to access some information, such as an e-mail address, in the user's profile. At step 11 411, the user confirms and grants certain access rights to the MobileClient application. At step 12 412, the confirmation is sent to the OpenID provider, and at step 13 413, the OpenID provider processes the request.

At step 14 414, after the user has granted the access rights, the OpenID provider redirects the user back to the device and sends an OpenID token (i.e., an indication of an authenticated web identification) and other information, such as, for example, an e-mail address, if requested, to MobileClient on the device. At step 15 415, MobileClient validates the response with the OpenID provider to make sure the response was sent from the OpenID provider and that the response was not tampered with. Then, at step 16 416, the OpenID provider confirms the authenticity of the message.

At step 17 417, MobileClient obtains the address of the communication device 100 and binds the device address to the OpenID token. Then, at step 18 418, MobileClient sends the bound device address and OpenID token to the push server.

At step 19 419, the push server uses the bound device address and/or OpenID token to create a URL associated with the communication device 110, and then sends the newly created URL to MobileClient at step 20 420. At step 21 421, MobileClient stores this URL to the context in the web server of the mobile communication device. Finally, at step 22 422, the mobile communication device is ready and accessible via the URL.

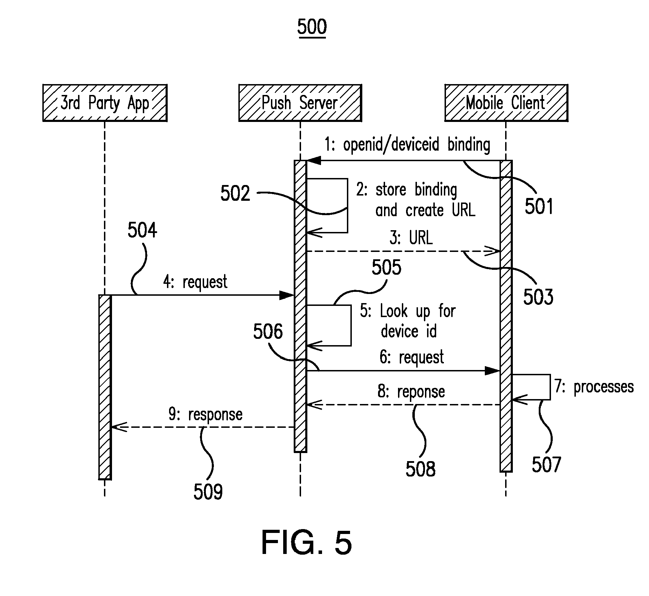

Referring now to FIG. 5, a data flow diagram 500 illustrating a process for enabling a communication between a third party application service and a mobile communication device by using a URL associated with the mobile communication device, in accordance with exemplary embodiments of the present invention, is shown. In step 1 501, MobileClient binds the OpenID token to the device address and sends the binding to the push server. In step 2 502, the push server stores the binding and also uses the binding to create a URL associated with the mobile communication device. In step 3 503, the push server sends the newly created URL to MobileClient.

In step 4 504, a third party application service in the cloud sends a message to the push server using the URL, thereby effectively requesting to communicate with the mobile communication device. At step 5 505, the push server retrieves the OpenID information from the URL in the request, and uses the OpenID information to find the device address. Then, at step 6 506, the push server forwards the received message to MobileClient on the push channel that the push server has previously established with the mobile communication device.

At step 7 507, MobileClient receives and processes the message, and then generates and transmits a response thereto at step 8 508. At step 9 509, the push server forwards the response to the application service, thereby effectively establishing a communication channel between the mobile communication device and the application service.

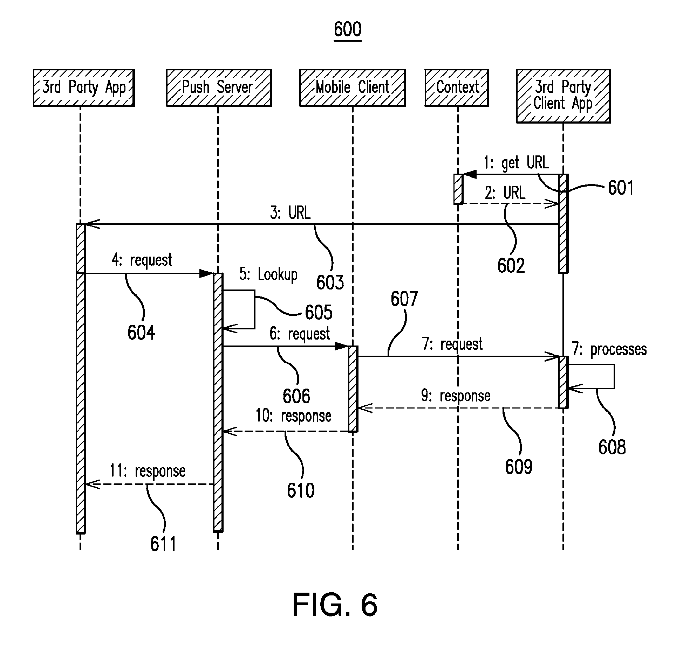

Referring now to FIG. 6, a data flow diagram 600 illustrating an exemplary process for enabling a communication between a third party application service and a communication device 110 by using a URL associated with the mobile communication device, in accordance with an alternative embodiment of the present invention, is shown. In this example, a client application has already been installed on the mobile communication device.

At step 1 601, the client application accesses the context of the web server on the mobile communication device to obtain the URL, which is transmitted to the client application at step 2 602. At step 3 603, the client application sends the URL over the regular HTTP protocol to its application server, which resides in the cloud. Thus, at step 4 604, when the application server in the cloud needs to communicate with the client application on the user device (e.g., to obtain information from the user, such as, for example, contact or schedule information), the application server in the cloud sends a request to the push server using the URL received in step 3 603. In order to specify a request to communicate with the client application, a client application identifier associated with the client application may be appended to the URL itself. For example, the request message in step 4 604 may be of the form "http://server:port/push-service/openid/{open-token}/service/{client-application identifier}".

At step 5 605, the push server receives the request, uses the URL to obtain the OpenID information, and then uses this to retrieve the device address for the user's mobile communication device. Then, at step 6 606, the push server forwards the request to the user's device.

At step 7 607, MobileClient receives the request and forwards the request to the client application, and then at step 8 608, the client application receives and processes the request. At step 9 609, the client application transmits a response with all requested information to MobileClient, and MobileClient then forwards the response to the push server at step 10 610. Finally, at step 11 611, the push server forwards the response to the application server in the cloud, thereby effectively establishing communication channel between the application server in the cloud and the client application on the user's mobile communication device.

As an example, the mobile communication device may be an Android mobile phone. This example describes how an exemplary embodiment of the present invention can to be utilized to render an Android phone accessible to other applications in the cloud. Applications in the cloud may include, for example, any social networking applications that send messages to and pull data from the phone.

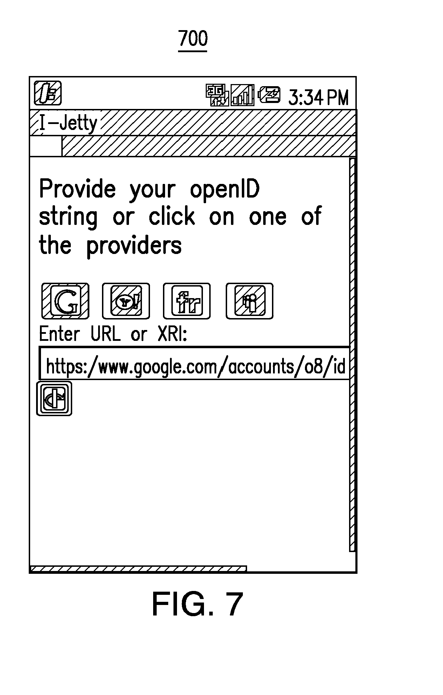

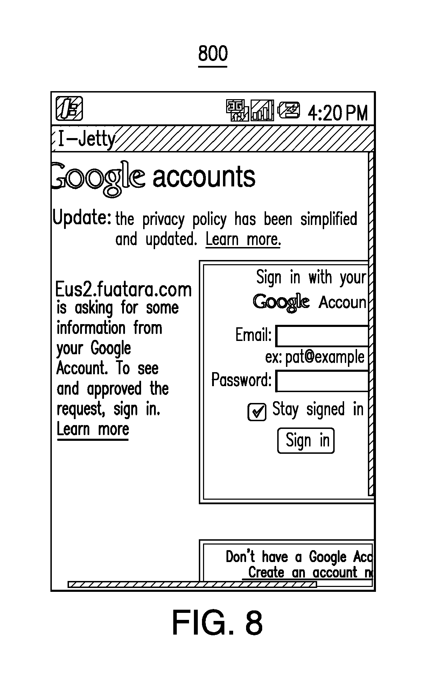

In this example, the user installs an iJetty web server which contains a MobileClient application onto the Android device. The user then initiates the iJetty server, and iJetty starts the MobileClient application during the bootstrap process. MobileClient opens a browser and displays an OpenID login page. Referring to FIG. 7, the user selects one of several suggested OpenID providers, as illustrated in the screen shot of FIG. 7. MobileClient then redirects the user to the selected OpenID provider site. Referring now to FIG. 8, the OpenID provider displays a log-in page, where the user logs in with her username and password.

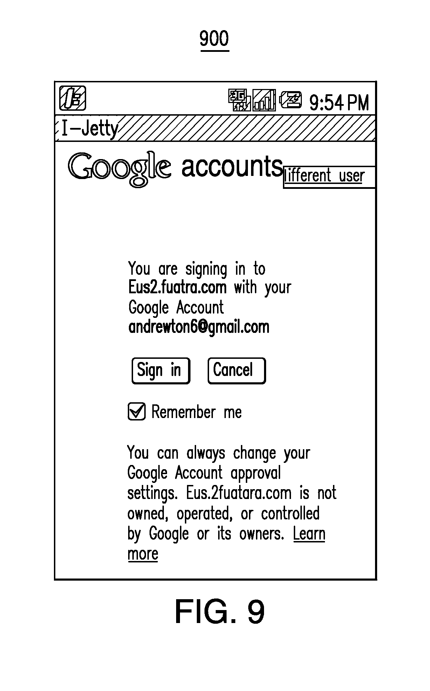

Referring now to FIG. 9, the OpenID provider authenticates the user and asks the user to confirm to sign in to the service. After the user confirms, the OpenID provider sends an OpenID token to MobileClient on the Android device. MobileClient retrieves the address of iJetty in the network and associates, or binds, the retrieved address with the Openld token. MobileClient then sends this OpenID token-address binding to the push server in the cloud.

When the push server receives the OpenID token-address binding, the push server uses the OpenID token to create a URL. Because the push server handles all communications with the user's Android device, the push server stores the recently-created URL for later reference. Then, the push server sends the URL to MobileClient.

MobileClient places the URL into the context of the iJetty web server so that any applications in the server can use the URL. The communication between MobileClient and the push server can be carried over any existing protocol. In this example, MobileClient and the push server establish a communication protocol called Web Connectivity or WARP to enable communication with each other. This protocol can shuttle messages between MobileClient and the push server, even when the user's Android device is protected behind a firewall. Similarly, all social networking applications in the cloud can communicate with the Android device via the push server.

The user can now use the Android device to deploy any application service, such as, for example, photo sharing, music, or ring tones sharing applications, to the cloud. By using these applications, any one can access photos, music, or rings tones stored in the user's Android device. This occurs because these applications use the service provided by the push server to communicate with the user's Android device.

In addition, developers can deploy their applications or services in the cloud, for example, a traffic alert service or a home security service. If the user is interested in using any of these services, such use can be implemented by the service requesting the user's OpenID identification information. Once the service has the user's OpenID information, the service uses the same OpenID Relying Party service as the one used by the push server to verify the user's Android device with the OpenID provider. This step requires redirecting the user to the OpenID provider site to log in. If the authentication is successfully completed, the OpenID provider sends the user's OpenID token to the requesting service. The service then uses this OpenID token to obtain the URL associated with the user's Android device from the push server. All subsequent communication between the service and the user's Android device is sent to that URL and eventually carried over the single push channel that exists between the push server and the Android device.

Referring now to FIG. 10, a flow chart illustrating a process 1000 for obtaining a URL associated with a mobile communication device, in accordance with exemplary embodiments of the disclosed solution, is shown. The process begins at 1005 when a user accesses the Internet on the mobile communication device. At 1010, the user uses the mobile communication device to enter a web identification authentication service, such as, for example, an OpenID provider, via the Internet. At 1015, the mobile communication device receives a request for information from the web identification authentication service, and a response to the request, including the requested information (e.g., the OpenID identifier string), is generated at 1020 and then transmitted to the web identification authentication service at 1025. Then, at 1030, the mobile communication device receives an indication of identification authentication, such as, for example, an OpenID token, from the web authentication identification service. At 1035, the mobile communication device transmits the received indication of identification authentication together with an address of the mobile communication device to a server node. Then, at 1040, the mobile communication device receives a Uniform Resource Locator (URL) which was created by the server node in response to the transmission, and the URL is stored in the mobile communication device at 1045. Finally, at 1050, the mobile communication device uses the stored URL to communicate with an application service in the cloud via the server node.

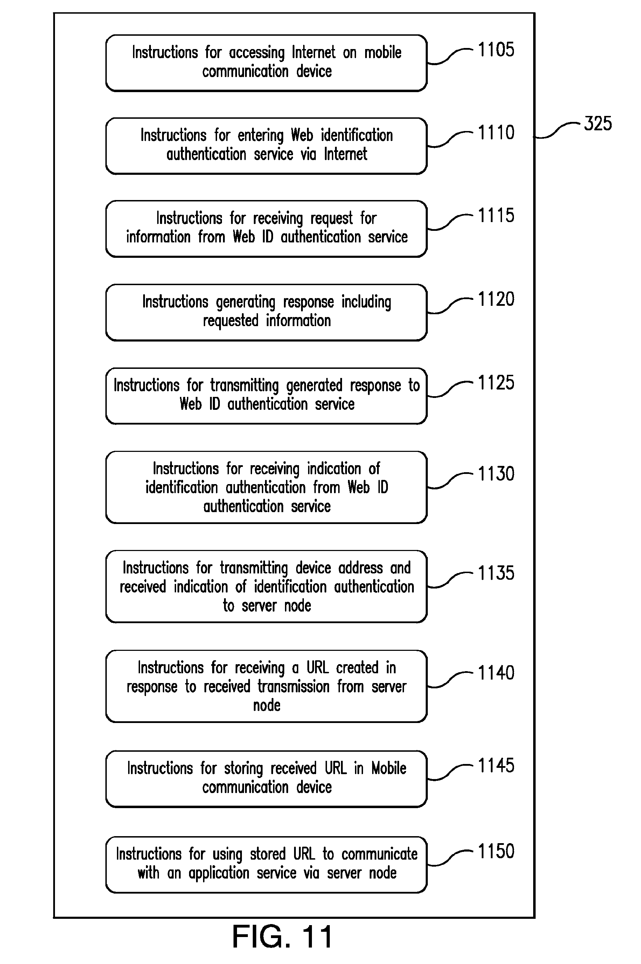

Referring now to FIG. 11, an embodiment of computer readable program code (CRPC) 325 is illustrated. In the embodiment shown, CRPC 325 includes: (a) a set of instructions 1105 for accessing the Internet on a mobile communication device; (b) a set of instructions 1110 for entering a web identification authentication service, such as, for example, an OpenID provider, via the Internet; (c) a set of instructions 1115 for receiving a request for information from the web identification authentication service; (d) a set of instructions 1120 for generating a response, including the request information, to the request; (e) a set of instructions 1125 for transmitting the generated response to the web identification authentication service; (f) a set of instructions 1130 for receiving an indication of identification authentication, such as, for example, an OpenID token, from the web identification authentication service; (g) a set of instructions 1135 for transmitting the address of the mobile communication device and the received indication of identification authentication to a server node; (h) a set of instructions 1140 for receiving a URL created in response to the transmission from the server node; (i) a set of instructions 1145 for storing the received URL in the mobile communication device; and (j) a set of instructions 1150 for using the stored URL to communicate with an application service via the server node.

Referring now to FIG. 12, a flow chart illustrating a process 1200 for enabling communication between a mobile communication device and an application service by creating a URL associated with the mobile communication device, in accordance with exemplary embodiments of the disclosed solution, is shown. The process begins at 1205 when a server node receives and stores an address that identifies a mobile communication device together with an indication of an authenticated web identification, such as, for example, an OpenID token, relating to the mobile communication device. At 1210, the server node uses the stored device address and indication of authenticated web identification to create a URL which is associated with the mobile communication device. At 1215, the server node transmits the newly created URL to the mobile communication device. Then, at 1220, the server node receives a request from an application service to communicate with the mobile communication device. At 1225, the server node retrieves the stored device address, and then uses the retrieved address to establish a communication channel with the mobile communication device at 1230.

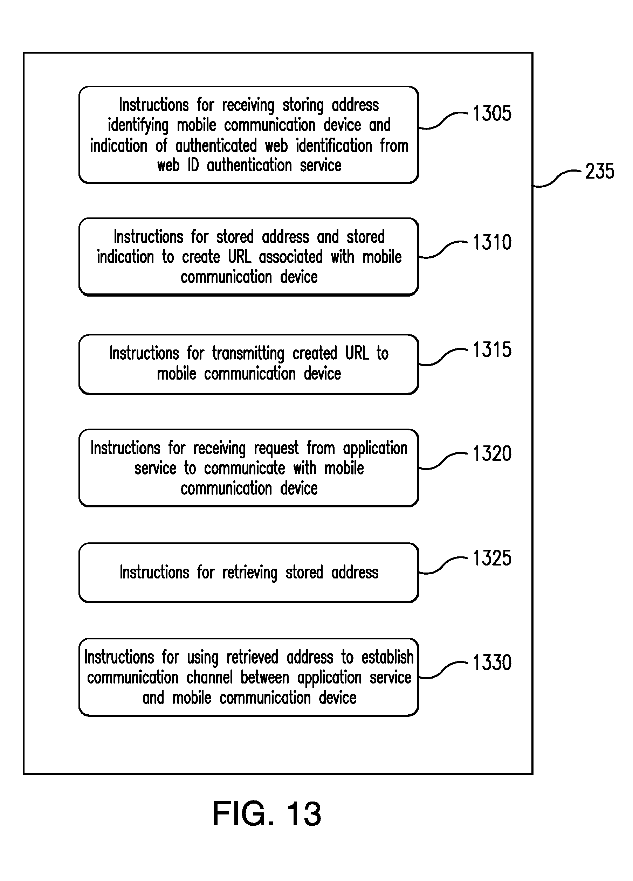

Referring now to FIG. 13, an embodiment of computer readable program code (CRPC) 235 is illustrated. In the embodiment shown, CRPC 235 includes: (a) a set of instructions 1305 for receiving and storing an address identifying a mobile communication device and an indication of an authenticated web identification, such as, for example, an OpenID token, relating to the mobile communication device; (b) a set of instructions 1310 for using the stored address and indication of authenticated web identification to create a URL associated with the mobile communication device; (c) a set of instructions 1315 for transmitting the created URL to the mobile communication device; (d) a set of instructions 1320 for receiving a request from an application service to communicate with the mobile communication device; (e) a set of instructions 1325 for retrieving the stored device address; and (f) a set of instructions 1330 for using the retrieved device address to establish a communication channel between the application service and the mobile communication device.

While various embodiments have been described above, it should be understood that they have been presented by way of example only, and not limitation. Thus, the breadth and scope of the present disclosure should not be limited by any of the above-described exemplary embodiments. Moreover, any combination of the above-described elements in all possible variations thereof is encompassed by the disclosure unless otherwise indicated herein or otherwise clearly contradicted by context.

Additionally, while the processes described above and illustrated in the drawings are shown as a sequence of steps, this was done solely for the sake of illustration. Accordingly, it is contemplated that some steps may be added, some steps may be omitted, the order of the steps may be re-arranged, and some steps may be performed in parallel.

## Claims

1. A method for enabling communication with a communication device, comprising:
accessing the Internet on the communication device;
entering a web identification authentication service via the Internet;
receiving a request for information from the web identification authentication service;
generating a response, the response including the requested information;
transmitting the generated response to the web identification authentication service;
receiving an indication of identification authentication from the web identification authentication service;
transmitting a device address and the received indication of identification authentication to a server node;
receiving, from the server node, a Uniform Resource Locator (URL) created in response to the received transmission of the device address and the indication of identification authentication; and
storing the received URL in the communication device.

2. The method of claim 1, further comprising using the stored URL to communicate with an application service via the server node.

3. The method of claim 1, further comprising enabling communication with one or more additional communication devices, each of the one or more additional communication devices configured to use the same received indication of identification authentication,
wherein the communication with each of the one or more additional communication devices is enabled by each of the one or more additional communication devices receiving the previously created URL from the server node and storing the received URL.

4. The method of claim 1, wherein the steps of receiving the indication of identification authentication from the web identification authentication service, transmitting the device address and the received indication of identification authentication to the server node, and receiving the URL from the server node are performed by using a MobileClient application residing on the communication device.

5. The method of claim 1, wherein the step of accessing the Internet includes opening a web browser residing on the communication device and using the web browser to access the Internet.

6. The method of claim 1, wherein the web identification authentication service comprises an OpenID provider service.

7. The method of claim 6, wherein the received request for information includes a request for a user name and a password.

8. The method of claim 6, wherein the received indication of identification authentication comprises an OpenID token.

9. A communication device for use in an Internet-accessible communication network, the communication device in communication with a server node residing on the network, the communication device comprising:
a processor;
a transceiver coupled to the processor; and
a memory coupled to the processor,
wherein the processor is configured to:
enable access to the Internet;
enable entry to a web identification authentication service via the Internet;
receive, via the transceiver, a request for information from the web identification authentication service;
generate a response, the response including the requested information;
cause the transceiver to transmit the generated response to the web identification authentication service;
receive, via the transceiver, an indication of identification authentication from the web identification authentication service;
cause the transceiver to transmit a device address and the received indication of identification authentication to the server node;
receive, from the server node via the transceiver, a Uniform Resource Locator (URL) created in response to the received transmission of the device address and the indication of identification authentication; and
store the received URL in the memory.

10. The communication device of claim 9, wherein the processor is further configured to use the stored URL for enabling the communication device to communicate with an application service via the server node.

11. The communication device of claim 9, further comprising a MobileClient application residing thereon, wherein the processor is further configured to use the MobileClient application to:
receive, via the transceiver, the indication of identification authentication from the web identification authentication service;
cause the transceiver to transmit the device address and the received indication of identification authentication to the server node; and
receive, via the transceiver, the URL from the server node.

12. The communication device of claim 9, further comprising a web browser, wherein the processor is further configured to open the web browser and use the web browser to access the Internet.

13. The communication device of claim 9, wherein the web identification authentication service comprises an OpenID provider service.

14. The communication device of claim 13, wherein the request for information includes a request for a user name and a password.

15. The communication device of claim 13, wherein the received indication of identification authentication comprises an OpenID token.

16. A method for providing a communication channel with at least one communication device, comprising:
receiving and storing an address identifying the at least one communication device and an indication of an authenticated web identification relating to the at least one communication device from a web identification authentication service;
using the stored address and the stored indication to create a Uniform Resource Locator (URL) associated with the at least one communication device;
transmitting the created URL to the at least one communication device;
receiving a request from an application service to communicate with the at least one communication device;
retrieiving the stored address; and
using the retrieved address to establish the communication channel with the at least one communication device.

17. The method of claim 16, wherein the web identification authentication service comprises an OpenID provider.

18. The method of claim 17, wherein the indication of an authenticated web identification comprises an OpenID token.

19. The method of claim 16, wherein the method further comprises interfacing with a MobileClient application residing on the at least one communication device to:
receive the address identifying the at least one communication device and the indication of an authenticated web identification from the web identification authentication service, and
transmit the created URL to the at least one communication device.

20. A server node for providing a communication channel with at least one communication device, the server node comprising:
a processor;
a transceiver coupled to the processor; and
a memory coupled to the processor,
wherein the processor is configured to:
receive, via the transceiver, an address identifying the at least one communication device and an indication of an authenticated web identification relating to the at least one communication device from a web identification authentication service;
cause the received address and the received indication to be stored in the memory;
use the stored address and the stored indication to create a Uniform Resource Locator (URL) associated with the at least one communication device;
cause the transceiver to transmit the created URL to the at least one communication device;
receive, via the transceiver, a request from an application service to communicate with the at least one communication device;
retrieive the stored address from the memory; and
use the retrieved address to establish the communication channel between the server node and the at least one communication device.

21. The server node of claim 20, wherein the web identification authentication service comprises an OpenID provider.

22. The server node of claim 21, wherein the indication of an authenticated web identification comprises an OpenID token.

23. The server node of claim 20, wherein the processor is further configured to interface with a MobileClient application residing on the at least one communication device to:
receive, via the transceiver, the address identifying the at least one communication device and the indication of an authenticated web identification from the web identification authentication service, and
cause the transceiver to transmit the created URL to the at least one communication device.

24. A method for enabling communication with a user, comprising:
using a communication device to access a web identification authentication service via the Internet;
receiving, via the communication device, a request for user-specific information from the web identification authentication service;
inputting the requested user-specific information into the communication device;
using the communication device to transmit the user-specific information to the web identification authentication service;
receiving, via the communication device, a user-specific indication of identification authentication from the web identification authentication service;
inputting a user-specific identifier into the communication device;
using the communication device to transmit the user-specific identifier and the received indication of identification authentication to a server node;
receiving, from the server node, a Uniform Resource Locator (URL) created in response to the received transmission of the user-specific identifier and the indication of identification authentication; and
storing the received URL in the communication device.

25. The method of claim 24, further comprising using the stored URL and the communication device to communicate with an application service via the server node.

26. The method of claim 24, further comprising enabling communication with at least one additional communication device by storing the received URL in the at least one additional communication device.

27. The method of claim 24, wherein the user-specific identifier is selected from the group consisting of a personal identification number, a user-generated text string, and an email address.
